# EUROPÄISCHE PATENTSCHRIFT

(11) **EP 0 780 027 B1**
(45) Veröffentlichungstag und Bekanntmachung des Hinweises auf die Patenterteilung: **06.05.1998**
(21) Anmeldenummer: 95929749.0
(22) Anmeldetag: 05.09.1995
(51) Int. Cl.: H01Q 7/00, G06K 19/077

(54) **ANTENNENSPULE**
ANTENNA COIL
BOBINE-ANTENNE

(30) Priorität: 05.09.1994 DE 4431603
(43) Veröffentlichungstag der Anmeldung: 25.06.1997
(73) Patentinhaber: SIEMENS AKTIENGESELLSCHAFT, 80333 München (DE)
(72) Erfinder: HOUDEAU, Detlef, D-84085 Langquaid (DE); KIESEWETTER, Lothar, D-12357 Berlin (DE); MUNDIGL, Josef, D-93182 Duggendorf (DE)
(86) Internationale Anmeldenummer: DE9501197
(87) Internationale Veröffentlichungsnummer: WO9608054

(56) Entgegenhaltungen:
- DE-A- 2 912 341
- DE-A- 3 441 670
- DE-U- 9 115 582
- PATENT ABSTRACTS OF JAPAN vol. 7 no. 33 (E-157) ,9.Februar 1983 & JP,A,57 186802 (KOUON DENPA) 17.November 1982,
- PATENT ABSTRACTS OF JAPAN vol. 9 no. 189 (E-333) ,6.August 1985 & JP,A,60 057703 (MATSUSHITA) 3.April 1985,

## Beschreibung

Bei kontakt- oder berührungslosen Chipkarten werden die Energie zur Versorgung des Halbleiterchips und die von und zum Chip übertragenen Daten über zumindest eine Antennenspule, die an oder in der Chipkarte angeordnet ist, übermittelt.

Bisherige Konzepte zur Herstellung solcher Antennenspulen sehen vor, diese aus lackisoliertem Kupferdraht zu wickeln. Es wurde auch vorgeschlagen, die Antennenspulen) als planare Spulen) beispielsweise mittels Dickschichttechnik direkt auf dem Plastikkörper der Chipkarte aufzubringen.

Aus den Druckschriften "Patent Abstracts of Japan, vol. 7, no. 33 (E-157), 9. Februar 1983 & JP,A,57 186802 (KOUON DENPA), 17. November 1982" und "Patent Abstracts of Japan, vol. 9, no. 189 (E-333), 9. Februar 1983 & JP,A,60 057703 (MATSUSHITA), 3. April 1985" sind Antennenspulen bekannt, deren Windungen aus dünnen, parallel auf einem flexiblen, nicht-leitenden Trägerband angeordneten Leiterbahnen derart gebildet sind, daß das erste Ende einer jeweiligen Leiterbahn mit dem zweiten Ende einer benachbarten Leiterbahn elektrisch leitend verbunden ist, wobei das erste Ende der ersten Leiterbahn und das zweite Ende der letzten Leiterbahn die Spulenanschlüsse bilden.

Dort sind jedoch die Knicke der Leiterbahnen derart durchgeführt, daß die Leiterbahnen vor und nach einem Knick in Ebenen verlaufen, die in einem Winkel von etwa 90° zueinander orientiert sind, so daß sich eine räumliche Struktur ergibt. Eine solche Antennenspule ließe sich nicht in eine Chipkarte, die ja nur weniger als 1mm dick sein darf, einbauen Aufgabe der Erfindung ist es daher, eine Antennenspule anzugeben, die einfach, kostengünstig und leicht automatisierbar herzustellen ist, dabei in Verbindung mit einem Halbleiterchip leicht zu handhaben ist und eine geringe Einbauhöhe hat.

Die Aufgabe wird durch eine Antennenspule gemäß dem Anspruch 1 gelöst. Vorteilhafte Weiterbildungen sind in den abhängigen Ansprüchen angegeben.

Ein besonderer Vorteil der erfindungsgemäßen Antennenspule ist, daß sie aus am freien Markt erhältlichen mit Leiterbahnen versehenen Trägerbändern wie z.B. Mylar®-Flachbandleitungen (®=Dupont) hergestellt werden kann. Diese Trägerbänder müssen nur noch in die richtige Länge und Breite gebracht und zu vorzugsweise einer Rechteckspule geformt werden. Es sind natürlich auch andere Arten eines Polygons möglich, beispielsweise ein Dreieck.

Die Formung geschieht dabei derart, daß ein Abschnitt des Trägerbands in einem Winkel von etwa 180 Grad zu einem anderen Abschnitt geknickt wird, so daß die beiden Abschnitte im wesentlichen in einer Ebene zu liegen kommen. Dieses Knicken erfolgt so oft, bis die beiden Enden des Trägerbands einander gegenüberstehen oder aufeinander zu liegen kommen. Die Enden der Bänder werden abisoliert und die dann freistehenden Leiterbahnenden beispielsweise verzinnt und miteinander verlötet. Dabei wird das zweite Ende der ersten Leiterbahn mit dem ersten Ende der zweiten Leiterbahn, deren zweites Ende mit dem ersten Ende der dritten Leiterbahn usw. verbunden. Es bleiben nur das erste Ende der ersten Leiterbahn und das zweite Ende der letzten Leiterbahn frei, die als Anschlüsse der Antennenspule dienen.

Diese Vorgehensweise ist leicht automatisierbar und führt damit zu gut reproduzierbaren Spulenwerten wie beispielsweise deren Güte. Da das Trägerband trotz seiner Flexibilität eine gewisse Grundstreifigkeit hat, ist die fertige Antennenspule mit daran angebrachtem Halbleiterchip leicht zu handhaben, das heißt leicht zu transportieren und in eine Chipkarte einzubauen.

In vorteilhafter Weise wird das Trägerband bei der Formung der Antennenspule um die abgeschrägten Ecken eines flachen Trägerkörpers geführt, so daß eine noch bessere Handhabung ermöglicht wird.

Die Erfindung wird nachfolgend anhand von Ausführungsbeispielen mit Hilfe von Figuren näher beschrieben. Dabei zeigen die
- Figuren 1 bis 3: mögliche Querschnitte durch mit Leiterbahnen versehenen Trägerbändern,
- Figur 4: eine durch Knicke geformte Antennenspule und
- Figur 5: eine um einen flachen Trägerkörper gewickelte Antennenspule.

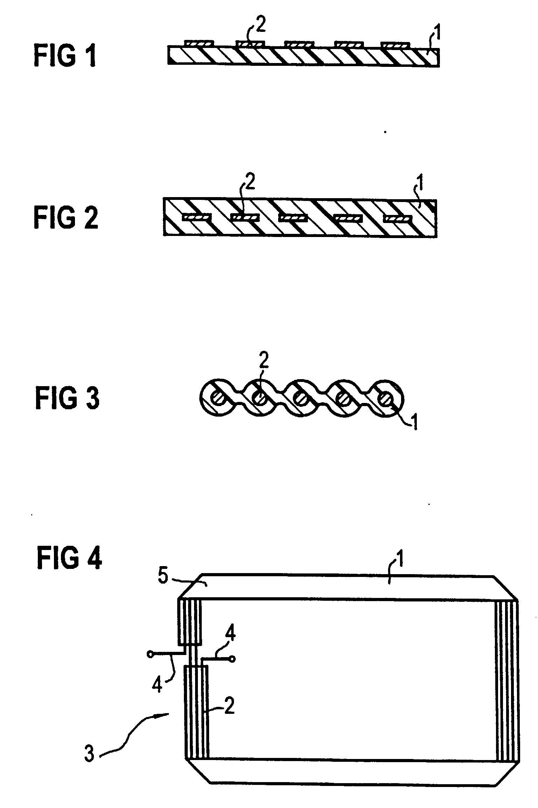

Figur 1 zeigt einen Querschnitt durch eine erste mögliche Ausführungsform eines flexiblen, nicht leitenden Trägerbandes 1 mit darauf aufgebrachten Leiterbahnen 2. Als Material für das Trägerband 1 kann beispielsweise Mylar-Polyesterfolie verwendet werden. Auf dieses Grundmaterial werden die Leiterbahnen 2 mittels Drucktechnik aufgebracht. Die Figuren 2 und 3 zeigen weitere Ausführungsformen von Trägerbändern 1, wobei hier jedoch die Leiterbahnen 2 in die Trägerbänder 1 eingebettet sind. In Figur 2 haben die Leiterbahnen 2 ebenso wie in Figur 1 rechteckigen Querschnitt, während in Figur 3 die Leiterbahnen 2 einen runden Querschnitt aufweisen.

In Figur 4 ist eine fertig geformte Antennenspule 3 dargestellt. Das Trägerband 1 ist mit vier Knicken 5 versehen, so daß jeweilige Abschnitte des Trägerbandes etwa im rechten Winkel zueinander in etwa derselben Ebene verlaufen. Die Enden der Leiterbahnen 2 sind abisoliert und derart miteinander verbunden, daß das zweite Ende der ersten Leiterbahn mit dem ersten Ende der zweiten Leiterbahn und deren zweites Ende mit dem ersten Ende der dritten Leiterbahn verbunden ist. Das erste Ende der ersten Leiterbahn und das zweite Ende der dritten und gleichzeitig letzten Leiterbahn bilden die Anschlüsse 4 der Antennenspule 3.

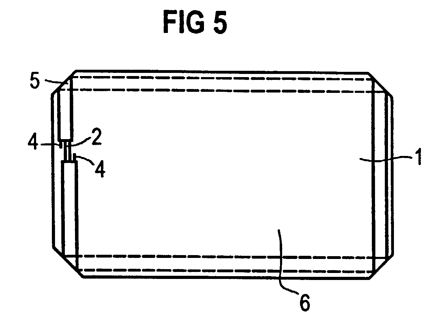

Figur 5 zeigt ebenfalls eine erfindungsgemäße Antennenspule, bei der jedoch die Knicke 5 um die abgeschrägten Ecken eines Trägerkörpers 6 geführt sind. Das Trägerband 1 verläuft dabei auf beiden Oberflächen des Trägerkörpers 6.

## Patentansprüche

1. Antennenspule, insbesondere für eine kontaktlose Chipkarte, deren Windungen aus dünnen, parallel auf einem flexiblen, nicht-leitenden Trägerband (1) angeordneten Leiterbahnen derart gebildet sind, daß das erste Ende einer jeweiligen Leiterbahn (2) mit dem zweiten Ende einer benachbarten Leiterbahn (2) elektrisch leitend verbunden ist, wobei das erste Ende der ersten Leiterbahn und das zweite Ende der letzten Leiterbahn die Spulenanschlüsse (4) bilden,
**dadurch gekennzeichnet,**
daß das Trägerband (1) Knicke (5) aufweist, so daß es bei verbundenen Enden der Leiterbahnen (2) ein Polygon bildet, wobei ein jeweiliger Knick (5) um etwa 180 Grad geführt ist, so daß die Antennenwindungen etwa in derselben Ebene liegen.

2. Antennenspule nach Anspruch 1, **dadurch gekennzeichnet,** daß die Leiterbahnen (2) in dem Trägerband (1) eingebettet sind.

3. Antennenspule nach einem der vorhergehenden Ansprüche, **dadurch gekennzeichnet,** daß die Leiterbahnen (2) etwa rechteckigen Querschnitt aufweisen.

4. Antennenspule nach einem der Ansprüche 1 bis 3, **dadurch gekennzeichnet,** daß das Trägerband (1) auf einem flachen, nicht-leitenden Trägerkörper (6) angeordnet ist.

5. Antennenspule nach einem der Ansprüche 1 bis 4, **dadurch gekennzeichnet,** daß die Knicke (5) des Trägerbands (1) um die abgeschrägten Ecken eines im wesentlichen rechteckigen, flachen Trägerkörpers (6) geführt sind.

## Claims

1. Antenna coil, in particular for a contactless smart card, the turns of which coil are formed by thin conductor tracks, which are arranged in parallel on a flexible, non-conductive carrier strip (1), in such a way that the first end of a respective conductor track (2) is electrically conductively connected to the second end of a neighbouring conductor track (2), the first end of the first conductor track and the second end of the last conductor track forming the coil connections (4), characterized in that the carrier strip (1) has bends (5), with the result that it forms a polygon when the ends of the conductor tracks (2) are connected, a respective bend (5) being routed through approximately 180 degrees, with the result that the antenna turns lie approximately in the same plane.

2. Antenna coil according to Claim 1 or 2, characterized in that the conductor tracks (2) are embedded in the carrier strip (1).

3. Antenna coil according to one of the preceding claims, characterized in that the conductor tracks (2) have an approximately rectangular cross-section.

4. Antenna coil according to one of Claims 1 to 3, characterized in that the carrier strip (1) is arranged on a flat, non-conductive carrier body (6).

5. Antenna coil according to one of Claims 1 to 4, characterized in that the bends (5) of the carrier strip (1) are routed around the bevelled corners of an essentially rectangular, flat carrier body (6).

## Revendications

1. Bobine-antenne, notamment pour une carte à puce sans contacts, dont les enroulements sont formés par des rubans conducteurs minces disposés de manière parallèle sur une bande de support (1) flexible non conductrice, de façon à ce que la première extrémité d'un ruban conducteur donné (2) soit, à chaque fois, reliée de manière électroconductrice à la seconde extrémité d'un ruban conducteur (2) adjacent, la première extrémité du premier ruban conducteur et la seconde extrémité du dernier ruban conducteur formant les bornes (4) de la bobine, caractérisée en ce que la bande de support (1) présente des pliures (5) de façon à former un polygone lorsque les extrémités des rubans conducteurs (2) sont reliées, chaque pliure (5) étant à chaque fois réalisée à 180 degrés environ, de manière à ce que les enroulements de l'antenne soient situés approximativement dans le même plan.

2. Bobine-antenne selon la revendication 1, caractérisée en ce que les rubans conducteurs (2) sont insérés dans la bande de support (1).

3. Bobine-antenne selon l'une des revendications précédentes, caractérisée en ce que les rubans conducteurs (2) ont une section transversale à peu près rectangulaire.

4. Bobine-antenne selon l'une des revendications 1 à 3, caractérisée en ce que la bande de support (1) est située sur un support (6) plat non conducteur.

5. Bobine-antenne selon l'une des revendications 1 à 4, caractérisée en ce que les pliures (5) de la bande de support (1) sont réalisées autour des angles taillés en biseau d'un support (6) plat essentiellement rectangulaire.
